(19) Europäisches Patentamt
European Patent Office
Office européen des brevets

(11) EP 2 300 504 B1

(12) EUROPEAN PATENT SPECIFICATION

(45) Date of publication and mention of the grant of the patent:
**28.11.2012 Bulletin 2012/48**

(21) Application number: **09793901.1**

(22) Date of filing: **16.06.2009**

(51) Int Cl.:
***C08F 220/28*** (2006.01) ***C11D 1/72*** (2006.01)

(86) International application number:
**PCT/EP2009/057478**

(87) International publication number:
**WO 2010/003783 (14.01.2010 Gazette 2010/02)**

# (54) COPOLYMERS AND DETERGENT COMPOSITIONS

COPOLYMERE UND WASCHMITTELZUSAMMENSETZUNGEN

COPOLYMÈRES ET COMPOSITIONS DÉTERGENTES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **11.07.2008 EP 08160231**

(43) Date of publication of application:
**30.03.2011 Bulletin 2011/13**

(73) Proprietors:
- **Unilever N.V.**
  **3013 AL Rotterdam (NL)**
  Designated Contracting States:
  **AT BE BG CH CZ DE DK EE ES FI FR GR HR HU IS IT LI LT LU LV MC MK NL NO PL PT RO SE SI SK TR**
- **Unilever PLC**
  **London EC4Y 0DY (GB)**
  Designated Contracting States:
  **CY GB IE MT**

(72) Inventors:
- **MCKEE, Anthony**
  **Bebington Wirral Merseyside CH63 3JW (GB)**
- **ROGERS, Susanne, H.**
  **Bebington Wirral Merseyside CH63 3JW (GB)**

(74) Representative: **Bristow, Stephen Robert**
**Unilever Patent Group**
**Colworth House**
**Sharnbrook**
**Bedford, MK44 1LQ (GB)**

(56) References cited:
**EP-A- 0 408 917 GB-A- 1 283 813**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 300 504 B1

## Description

The present invention relates to copolymers which are used in laundry cleaning. The invention provides copolymers comprising the monomers glycerol (meth)acrylate and poly(alkylene oxide) alkyl ether (meth)acrylate, a method for production and use of the copolymers, and detergent compositions comprising these copolymers.

Polymers are widely used in detergent compositions in order to improve the efficacy of the composition on the cleaning process. Their functionalities range from the use as surfactants, as builders, and to promote soil release and to prevent redeposition of the soil. Soil release polymers in general adhere to the fabric, thereby making subsequent staining easier to remove. Typically a fabric is washed in a solution containing a soil release polymer and then rinsed and dried as normal. If the fabric is then stained, the stain is more easily removed than if the fabric had not been pre washed in wash liquor containing the soil release polymer. Another common problem encountered when laundering fabrics is the deposition of particulates from the wash liquor (resultant either from particulate stains or present in the source water) onto unstained areas of fabric. This results in a general dulling of coloured fabrics or greying of white fabrics. The addition of anti-redeposition polymers alleviates this problem: anti-redeposition polymers keep soil in suspension during the wash, thereby stopping redeposition of the soil onto the fabric during the washing process.

Sodium carboxy methyl cellulose (SCMC) is a typical example of an anti-redeposition polymer, and has been extensively used for decades already (see for example GB 1 354 498). A typical example of a soil release polymer is Sokalan HP22 ex BASF, which is a copolymer having a poly(ethylene oxide) backbone grafted with poly(vinyl acetate) side groups, as for example used in WO 97/34984. Another example of such a polymer is Repel-o-Tex SF2 (ex Rhodia).

Also new polymers are being developed, in order to improved stain removal during the washing process for example by improving the primary detergency effect, as well as to improve soil release and to prevent redeposition of the soil.

EP 1 611 877 A1 discloses a method for the impregnation of a drug into ophthalmic articles in order to prepare drug sustained release systems for the treatment of eye related disorders. The ophthalmic articles are preferably made from linear, crosslinked, or branched polymers that are selected from for example poly(acrylates), poly(glycerol methacrylates), poly(ethyleneglycol methacrylates), cellulose, and a long list of other polymers, none of them especially preferred.

US 7,238,753 B1 discloses a stainproofing agent for carpet, wherein a stainproofing agent is exemplified that comprises polyethyleneglycolmethacrylate / glycerol methacrylate = 70/30 by weight ratio copolymer. This polymer is used in combination with other polymers.

EP 0408917A1 discloses a copolymer comprising an acrylate or methacrylate having a fluoroalkyl group and other groups that can impart durable water and oil repellency and soil releasability to fabrics.

GB 1283813 discloses hydrophilic polymers that are swellable hydrogels comprising at least two ethylenically unsaturated polymerisable momomers.

A problem that still exists is to improve the detergency effect, especially the primary detergency effect of laundry detergent compositions on textile stains. This is especially required for, but not limited to particulate stains like gravel, clay and mud, and plant based stains like grass stains. Accordingly it is an object of the present invention to provide improved detergent compositions that can improve the removal of soils and stains during the cleaning process by enhancing the primary detergency of the detergent composition. Additionally it is another object of the present invention to provide detergent compositions that improve soil release, and/or promote anti-redeposition of the soil.

We have now found that one or more of these objects can be achieved by a water-soluble non-crosslinked copolymer comprising the monomers glycerol (meth)acrylate and poly(alkylene oxide) alkyl ether (meth)acrylate and less than 20wt% of another type of monomer. The incorporation of the polymers in laundry detergent compositions provides advantages like improved detergency of the surfactant system, especially in relation to primary detergency, and improved detergency with respect to different types of stains, for example particulate soil stains such as clay, gravel and mud. Moreover, the composition of the invention is particularly useful for removal of plant based stains like grass stains. The inclusion of the copolymer shows an improvement to the primary detergency of a detersive surfactant system. In addition the copolymer of the invention may also exhibit soil release and/or anti-redeposition benefits in addition to this primary detergency benefit; however it is not required to exhibit these as such.

Accordingly in a first aspect the present invention provides a water-soluble non-crosslinked copolymer comprising the monomers glycerol (meth)acrylate and poly(alkylene oxide)alkyl ether (meth)acrylate, and less than 20 wt% of another type of monomer wherein the copolymer has a number average molecular weight between 2,000 and 100,000 Dalton.

In a second aspect the invention provides a method for production of the copolymer according to the first aspect of the invention by an addition polymerisation process, comprising the steps of:

a) forming an admixture of or comprising the monomers glycerol (meth)acrylate and poly(alkylene oxide) alkyl ether (meth)acrylate, and an initiator; and

b) reacting the mixture from a) to form a copolymer.

In a third aspect the invention provides a laundry detergent composition comprising:

a) a detersive surfactant at a concentration between 3 and 85% by weight of the total composition;
b) a copolymer according to the first aspect of the invention at a concentration between 0.5 and 25% by weight of the total composition;
c) optionally other detergent ingredients up to 100% by weight of the total composition.

In a fourth aspect the invention provides the use of a copolymer according to the first aspect of the invention to provide improved detergency to a laundry detergent composition comprising a surfactant.

In a fifth aspect the invention provides the use of a copolymer according to the first aspect of the invention to provide improved soil release to a laundry detergent composition.

In a sixth aspect the invention provides the use of a copolymer according to the first aspect of the invention to provide improved anti-redeposition to a laundry detergent composition.

In a seventh aspect the invention provides a method for improving the stain removal from a textile substrate, comprising the following steps:

a) provision of a wash liquor comprising the laundry detergent composition according to the third aspect of the invention; and,
b) contacting one or more stained textile substrates with said wash liquor during one or more steps of a laundry process.

**Detailed description**

All percentages mentioned herein are by weight calculated on the total composition, unless specified otherwise. The abbreviation 'wt%' is to be understood as % by weight of the total composition.

Primary detergency is herein described as the detergency effect on a stain in the primary or first wash. The fabric is stained and subsequently treated with the laundry detergent composition of the invention. The detergency effect (measured as stain removal) of the laundry composition on the stain is termed as primary detergency. This is a separate process to so-called soil release using a polymer, which is treatment of fabric with a polymer (through a wash or other such treatment), with subsequent staining of the fabric, the soil release polymer having the effect of the easier removal of the stain.

The term '(meth)acrylate' embraces acrylate and methacrylate.

In the context of the present invention, molecular weights of monomers and polymers are expressed as number average molecular weights (Mn), except where otherwise specified. The molecular weight of a polymer is typically a distribution of molecular weights, and is normally quoted as an average. Polymers are typically polydisperse and molecular weight averages can be defined in several ways. Determination of the number average molar mass Mn involves counting the total number of molecules, regardless of their shape or size, present in a unit mass of the polymer. Determination of the weight average molar mass Mw involves counting the weight fractions of molecules. A measure of how polydisperse a polymer sample is quantitified by the ratio of Mw/Mn, which is the polydispersity index, PDi.

The textile/fabric substrates used in the context of the present invention can be any typical textile/fabric substrate, such as cotton (woven, knitted & denim), polyester (woven, knitted & microfibre), nylon, silk, polycotton (polyester/cotton blends), polyester elastine, cotton elastine, viscose rayon, acrylic or wool. Particularly suitable textile/fabric substrates are cotton, polycotton and polyester substrates.

**The copolymer and monomers**

the copolymers according to the invention comprise the monomers glycerol (meth)acrylate and poly(alkylene oxide) alkyl ether (meth)acrylate. The copolymers consist or consist essentially of these two types of monomers, which means that the copolymer comprises less than 20 wt%, preferably less than 10 wt%, more preferably less than 5 wt% of another type of monomer.

They are soluble, non-crosslinked addition polymers and include statistical, graft, gradient and alternating copolymers. Mostly preferred the copolymers comprise a backbone chain which is a linear backbone, meaning that the backbone is not branched or crosslinked. The copolymers could be regarded to be comb polymers, wherein the poly (alkylene oxide) alkyl ether side groups form the teeth of the comb. In another embodiment the copolymers according to the invention may also comprise block copolymers where for example the monomers are incorporated into the polymer as blocks of a single monomer, wherein a block may suitably consist of 4, or 5 or more single monomer molecules. In

that case the copolymer will comprise discrete regions of the monomer glycerol (meth)acrylate or of the monomer poly (alkylene oxide) alkyl ether (meth)acrylate or discrete regions of both monomers.

Glycerol (meth)acrylate may exist in the form of the isomers 1-glycerol (meth)acrylate (also known as 2,3 dihydroxy propyl (meth)acrylate) or 2-glycerol (meth)acrylate (also known as 1,3 dihydroxy propyl (meth)acrylate). Glycerol (meth)acrylate is also known as glycerol mono(meth)acrylate. In the context of the present invention the use of the term 'glycerol (meth)acrylate' encompasses a mixture of the isomers 1-glycerol (meth)acrylate or 2-glycerol (meth) acrylate, unless indicated otherwise.

The molecular structures of 1-glycerol methacrylate and 2-glycerol methacrylate are the following:

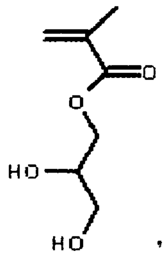
,
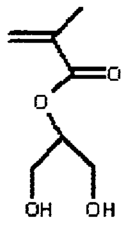

1-glycerol methacrylate    2-glycerol methacrylate

Glycerol (meth)acrylate is supplied for example by Evonik Industries (Essen, Germany).

The other class of monomers incorporated in the copolymer according to the invention is poly(alkylene oxide) alkyl ether (meth)acrylate. This class of monomers is a hydrophilic monomer that is often used to introduce hydrophilic side chains into a (co)polymer.

The number average molecular weight of the copolymer according to the invention is between 2,000 and 100,000 Dalton. Preferred copolymers have a number average molecular weight of between 2,000 and 50,000 Dalton, more preferred between 5,000 and 50,000 Dalton, mostly preferred between 5,000 and 20,000 Dalton.

The copolymer according to the invention comprises the monomer poly(alkylene oxide) alkyl ether (meth) acrylate. The alkylene oxide moiety may suitably be selected from the group consisting of ethylene oxide (EO), propylene oxide (PO), ethylene oxide - propylene oxide (both EO and PO moieties are incorporated), isopropylene oxide, butylene oxide, isobutylene oxide, and mixtures thereof. The alkyl group may suitably be a methyl or ethyl group.

Preferably the copolymer according to the invention comprises the monomer poly(alkylene oxide) alkyl ether (meth)acrylate, wherein this monomer is selected from the group consisting of poly(ethylene glycol) methyl ether (meth) acrylate, poly(ethylene glycol) ethyl ether (meth)acrylate, poly(propylene glycol) methyl ether (meth)acrylate, poly(propylene glycol) ethyl ether (meth)acrylate, and mixtures thereof.

Mostly preferred the copolymer according to the invention comprises poly(alkylene oxide) alkyl ether (meth) acrylate monomer, wherein this monomer comprises poly(ethylene glycol) methyl ether (meth)acrylate.

The preferred average number of alkylene oxide groups in the poly(alkylene oxide) alkyl ether (meth)acrylate monomer ranges from 5 to 100, more preferred from 5 to 50, mostly preferred from 10 to 50. Preferably the copolymer according to the invention comprises a poly(alkylene oxide) alkyl ether (meth)acrylate monomer, wherein the number average molecular weight is between 300 and 5,000 Dalton. More preferably the number average molecular weight of the poly(alkylene oxide) alkyl ether (meth)acrylate monomer is between 300 and 3,000 Dalton, even more preferred between 1,000 and 3,000 Dalton, mostly preferred about 2,000 Dalton.

As an example the molecular structure of the preferred monomer poly(ethylene glycol) methyl ether methacrylate is given here:

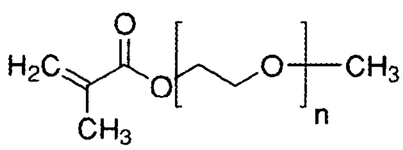

Poly(ethylene glycol) methyl ether methacrylate, comprising n EO groups.

When the number average molecular weight of this preferred monomer poly(ethylene glycol) methyl ether (meth)acrylate is about 2,000 Dalton, the average number of EO groups in the ethylene oxide moiety is about 45.

Preferably the molar ratio of the monomers poly(alkylene oxide) alkyl ether (meth)acrylate to glycerol (meth)acrylate that are comprised in the copolymer according to the invention ranges from 10:1 to 1:10. More preferably the molar ratio between poly(alkylene oxide) alkyl ether (meth)acrylate to glycerol (meth)acrylate ranges from 1:1 to 1:10, and even more preferably from 1:4 to 1:10, so that preferably on average more glycerol (meth)acrylate monomers than poly(alkylene oxide) alkyl ether (meth)acrylate monomers are comprised by the copolymer.

*Branched copolymers*

Although the copolymers according to the invention are preferably polymers that comprise a backbone chain which is a linear backbone, in another preferred embodiment are branched copolymers. Hence preferably the copolymer according to the invention is a branched copolymer comprising at least two chains of monomers,
wherein said chains comprise the monomer glycerol (meth)acrylate, or the monomer poly(alkylene oxide) alkyl ether (meth)acrylate, or both monomers, and
wherein the chains are covalently linked other than at their ends by a bridge formed by an ethyleneically polyunsaturated monomer.

Branched polymers are polymer molecules of a finite size which are branched. Branched polymers differ from crosslinked polymer networks which tend towards an infinite size having interconnected molecules and which are generally not soluble but often swellable. These preferred copolymers according to the invention that are branched copolymers are soluble, branched, non-crosslinked addition polymers and include statistical, graft, gradient and alternating branched copolymers. The preferred copolymer according to the invention that is a branched copolymer, is to be understood as a copolymer wherein a sample of said copolymer comprises on average at least two chains which are covalently linked by a bridge other than at their ends, and wherein said chains comprise the monomer glycerol (meth) acrylate, or the monomer poly(alkylene oxide) alkyl ether (meth)acrylate, or both monomers. When a sample of the polymer is made there might be accidentally some polymer molecules which are unbranched.

The ethyleneically polyunsaturated monomer is also referred to as 'multifunctional monomer' or 'brancher'. Preferred multifunctional monomers include but are not limited to divinyl aryl monomers such as divinyl benzene; (meth) acrylate diesters such as ethylene glycol di(meth)acrylate, propyleneglycol di(meth)acrylate and 1,3-butylenedi(meth) acrylate; polyalkylene oxide di(meth)acrylates such as tetraethyleneglycol di(meth)acrylate, poly(ethyleneglycol) di (meth)acrylate and poly(propyleneglycol) di(meth)acrylate; divinyl (meth)acrylamides such as methylene bisacrylamide; silicone-containing divinyl esters or amides such as (meth)acryloxypropyl-terminated poly(dimethylsiloxane); divinyl ethers such as poly(ethyleneglycol)divinyl ether; and tetra- or tri-(meth)acrylate esters such as pentaerythritol tetra(meth) acrylate, trimethylolpropane tri(meth)acrylate or glucose di- to penta(meth)acrylate.

Further examples include vinyl or allyl esters, amides or ethers of pre-formed oligomers or polymers formed via ring-opening polymerisation such as oligo(caprolactam), oligo(caprolactone), poly(caprolactam) or poly(caprolactone), or oligomers or polymers formed via a living polymerisation technique such as oligo- or poly(1,4-butadiene).

In case of the use of a preferred brancher divinyl benzene, a rather 'tight' branched polymer molecule can be obtained. When using a preferred brancher ethylene glycol dimethacrylate (EGDMA) a more stretched branched polymer can be obtained, depending on the length of the ethylene glycol moiety of the brancher monomer.

As indicated in the paragraph before, macrocrosslinkers or macrobranchers (multifunctional monomers having a molecular weight of at least 1000 Daltons) might also be used, and are generally formed by linking a polymerisable moiety, such as a vinyl or aryl group, to a pre-formed multifunctional polymer via a suitable linking unit such as an ester, an amide or an ether. Examples of suitable polymers are indicated above, but are not limited to these.

Branchers include methylene bisacrylamide, glycerol di(meth)acrylate, glucose di- and tri(meth)acrylate, oligo (caprolactam) and oligo(caprolactone). Multi end-functionalised hydrophilic polymers may also be functionalised using a suitable polymerisable moiety such as a (meth)acrylate, (meth)acrylamide or styrenic group.

**Method for production of copolymers**

The present invention also provides a method for production of the copolymer according to the invention by an addition polymerisation process, comprising the steps of:

a) forming an admixture of or comprising the monomers glycerol (meth)acrylate and poly(alkylene oxide) alkyl ether (meth)acrylate, and an initiator; and
b) reacting the mixture from a) to form a copolymer.

The polymers of the invention can be produced by any addition polymerisation process, preferably a free-radical chain polymerisation process. An addition polymerisation process is nowadays also called a radical chain addition polymerisation process.

Polymers of the present invention can be prepared by any standard addition polymerisation process method

utilized for the preparation of copolymers, which will result in a normal polydispersity or molecular weight distribution, yielding statistical copolymers. However, it is preferred that the polymers of the invention are synthesized using a method that gives targeted, molecular weights of the polymer. An example of such a process is the controlled polymerisation technique atom transfer radical polymerisation (ATRP), so that polymers with targeted molecular weights and compositions can be obtained.

Other methods that can be used for the production of the polymers according to the invention include anionic polymerisation, RAFT or Madix polymerisation (which may proceed via a macroinitiator like the ATRP process) and $Ce^{4+}$ redox initiated polymerisation.

*Atom transfer radical polymerisation technique*

When the ATRP technique would be used in the method for production of the polymer according to the invention, two reaction steps are involved:

*First reaction step*

In the first reaction step an initiator is produced and isolated, for example a macroinitiator. It will be apparent to the skilled person that other initiators may also be suitable for use in the ATRP process. A macroinitiator which would be suitable in the ATRP process for production of the copolymers of the present invention is a poly(alkylene glycol) macroinitiator, preferably a poly(ehtylene glycol) macroinitiator. This macroinitiator is produced by grafting a radical initiator onto a poly(alkylene glycol) via a nucleophilic displacement reaction between groups on the poly(alkylene glycol) and on the radical initiator, respectively. Typically the poly(alkylene glycol) macroinitiator is formed by a nucleophilic displacement reaction between:

(i) a poly(alkylene glycol) which is end-capped with at least one group capable of nucleophilic attack via its O, N or S atom, and

(ii) a radical initiator comprising: at least one -C(O)X group, in which X is a leaving group capable of substitution by the nucleophilic O, N or S atom of the end-capped poly(alkylene glycol) (i);

and at least one organic halide group capable of generating a radical, preferably in the presence of a transition metal catalyst. The term halide means fluoride, chloride, bromide or iodide.

The poly(alkylene glycol) (i) used to make the macroinitiator may be linear, branched or hyperbranched, provided it is end-capped with at least one group as described above. By 'end-capped' is meant that the capping group is at or near a terminal position of the poly(alkylene glycol). The poly(alkylene glycol) may be end-capped with suitable groups (e.g., hydroxyl) as a result of its synthesis or an additional reaction step may be required to end-cap the polymer chain.

The radical initiator (ii) comprises at least one -C(O)X group, in which X is a leaving group capable of substitution by the nucleophilic O, N or S atom of the poly(alkylene glycol) (i), and at least one organic halide group capable of generating a radical in the presence of a transition metal catalyst.

Examples of preferred radical initiators have the formula:

$$R^{14}\text{-C(O)X}$$

where $R^{14}$ is the organic halide group and X is the leaving group. Preferably, X is a halogen atom (i.e., F, Cl, Br or I). By 'organic halide group' is meant any linear, branched or cyclic (aromatic or otherwise) carbon structure, whether substituted or unsubstituted, which also contains a halogen atom (i.e., F, Cl, Br or I).

Preferred radical initiators have the general formula:

$$C(R^{15})(R^{16})Hal'\text{-}(R^{17})_r\text{-}C(O)Hal$$

where Hal' and Hal independently denote halogen atoms (as defined above), $R^{15}$ and $R^{16}$ are independently selected from hydrogen or a monovalent, optionally substituted, linear or branched $C_{1-18}$ hydrocarbon radical as described above, r is an integer having a value of 0 or 1, and $R^{17}$ is selected from divalent, optionally substituted, linear or branched $C_1$-$C_{18}$ hydrocarbon radicals as described above.

A particularly preferred radical initiator corresponding to the above general formula has:

Hal and Hal' = Br, $R^{15}$ and $R^{16}$ = methyl and r = 0.

The first reaction step involves a nucleophilic displacement reaction between (i) and (ii) at preferably ambient

temperature and atmospheric pressure. The nucleophilic O, N or S atom of the poly(alkylene glycol) (i) replaces leaving group X of radical initiator (ii), thereby linking (i) and (ii) to generate a poly(alkylene glycol) macroinitiator.

*Second reaction step*

The second reaction step in the ATRP process that can be used to produce the copolymer according to the invention involves reacting the poly(alkylene glycol) macroinitiator obtained in step (i) with the radically polymerisable monomers glycerol (meth)acrylate and poly(alkylene oxide) alkyl ether (meth)acrylate in a solvent, in the presence of a catalytic or stoichiometric amount of a Cu (I) salt (catalyst) or other transitional metal species and a ligand. The ligand is present in order to produce copolymer molecules with a small variety in length, so that the polydispersity is small.

The monomer concentration in this step can range from 20 wt% to 50 wt%, typically, depending on the viscosity of the reaction mixture. The reaction is carried out under a $N_2$ atmosphere at ambient temperature, and the typical reaction duration is 1 to 4 hours, depending on the kinetics of a particular reaction composition and the conditions chosen. The solvent is for example a methanol/water mixture at a 3:1 ratio by volume. The choice of solvent(s) depends on the solubility characteristics of the monomers. Water may be added to the solution to speed up the kinetics and to enable the reaction to be carried out at ambient temperature. Preferably initiator to catalyst to ligand molar ratios of about 1:1: 2 are applied in the ATRP technique.

In the second reaction step, the organic halide groups act as initiators in the presence of the radically polymerisable monomers (glycerol (meth)acrylate and poly(alkylene oxide) alkyl ether (meth)acrylate) and the catalyst (Cu (I) salt), resulting in the linking of radically polymerisable monomers onto the poly(alkylene glycol) macroinitiator by atom transfer radical polymerisation.

The catalyst for the second reaction step is a transition metal salt, preferably a Cu(I) salt such as a Cu(I) halide salt (i.e., wherein the halide is Cl, F, Br or I) and which is preferably complexed to a ligand which is suitable for solubilising the Cu(I) salt in the reaction mixture. WO 98/51261 describes preferred ligands for use in solubilising the Cu(I) salt in the reaction mixture (aprotic bidentates such as diphosphates, 2,2' bipyridyl, $C_1$-$C_{20}$ alkyl substituted bipyridyl and combinations thereof, most preferably 2,2' bipyridyl complexed to a Cu(I) halide salt, in particular CuCl). WO 98/51261 also refers to several journal articles which describe examples of the polymerisation process (atom transfer radical polymerisation) used in the second reaction step. Further examples of such descriptions can be found in Polymer Vol 39, No.21, pp 5163-5170 (Nakagawa et al) and Macromolecules 1997, 30, 2190-2193 (Haddleton et al). Those skilled in the art would understand that a variety of other ligands can also be employed.

The polymerisation process of the second reaction step can be furnished in bulk, solution, emulsion or suspension, as would be understood by those skilled in the art.

In case the aim is to produce a block copolymer, a first monomer can be added to the reaction vessel in the second reaction step, prior to adding the second monomer, so that blocks of single monomers can be formed, prior to combining the blocks of single monomers into copolymer molecules.

If a brancher is used in order to produce branched copolymers, this brancher will present in the second reaction step with the other monomers glycerol (meth)acrylate and poly(alkylene oxide) alkyl ether (meth)acrylate.

A *chain transfer agent* may be used in the preferred process, as is apparent to the skilled person. These agents may be an alcohol, preferably 2-propanol, or any thiol-containing molecule, and suitable thiols include but are not limited to $C_2$-$C_{18}$ alkyl thiols such as dodecane thiol, thioglycolic acid, thioglycerol, cysteine and cysteamine. If used, then the chain transfer agent is also present in the second reaction step

The *initiator* is a free-radical initiator and can be any molecule known to initiate free-radical polymerisation such as azo-containing molecules, persulfates, redox initiators, peroxides, benzyl ketones. These may be activated via thermal, photolytic or chemical means. Examples of these include but are not limited to 2,2'-azobisisobutyronitrile (AIBN), azobis (4-cyanovaleric acid), benzoyl peroxide, cumylperoxide, 1-hydroxycyclohexyl phenyl ketone, hydrogenperoxide/ascorbic acid. Initiators such as benzyl-N,N-diethyldithiocarbamate can also be used.

The copolymer of the invention may comprise residues of the initiator and possibly the chain transfer agent, as is apparent to the skilled person.

**Detergent Compositions and Ingredients**

In another aspect the invention provides a laundry detergent composition comprising:

a) a detersive surfactant at a concentration between 3 and 85% by weight of the total composition;
b) a copolymer according to the invention at a concentration between 0.5 and 25% by weight of the total composition;
c) optionally other detergent ingredients up to 100% by weight of the total composition.

Preferably the concentration of copolymer according to the invention is between 0.5 and 10% by weight of the

total composition.

A product according to the invention may take any suitable form, such as a solid, liquid or paste composition, for example as particulates (powders, granules), tablets or bars. Preferably the product is in a liquid form, which may be a concentrated liquid, meaning having preferably a total surfactant concentration of about 30 to 60% by weight. These embodiments are within the scope of the skilled person.

*Surfactants*

The laundry detergent composition according to the invention comprises a detersive surfactant. By a detersive surfactant we mean that the surfactant, or at least one surfactant of any surfactant mixture, provides a detersive, i.e. cleaning effect to textile fabrics treated as part of a laundering process. Other surfactants, which may or may not be detersive surfactants, can be used as part of the composition.

The detersive surfactant is present by weight in the laundry detergent compositions at a level of from 3 to 85% by weight, preferably from 3 to 60% by weight, more preferably from 3 to 40% by weight, most preferably from 3 to 35% by weight. Additional surfactants can also be incorporated in the laundry compositions of the invention; these may be detersive or non-detersive surfactants.

In general any surfactant may be used as a detersive surfactant, including anionic, nonionic, cationic, and amphoteric or zwitterionic surfactants, or any combination of these. Preferably the detersive surfactant comprises anionic surfactant, nonionic surfactant or a mixture of the two. More preferably the detersive surfactant mixture comprises anionic and nonionic surfactants. Cationic surfactant may optionally be present as part of the detersive surfactant.

If present, anionic surfactant is present at a level of from 0.1 to 95% by weight, preferably from 1 to 50% by weight, more preferably from 1.5 to 25% by weight based on total weight of surfactants present. Nonionic surfactant, if present, is incorporated at a level of from 0.1 to 95% by weight, preferably from 1 to 50% by weight, more preferably from 1.5 to 25% by weight based on total weight of surfactants present. If a detersive surfactant mixture is used that incorporates both anionic and nonionic surfactants, then preferably the ratio of anionic surfactant to nonionic surfactant is from 10:1 to 1:10.

In general, the nonionic and anionic surfactants of the surfactant system may be selected from the surfactants described in ’Surface Active Agents’ Vol. 1, by Schwartz & Perry, Interscience 1949, Vol. 2 by Schwartz, Perry & Berch, Interscience 1958, in the current edition of ’McCutcheon’s Emulsifiers and Detergents’ published by Manufacturing Confectioners Company or in ’Tenside-Taschenbuch’, H. Stache, 2nd Edn., Carl Hauser Verlag, 1981.

*Nonionic surfactant*

For the purposes of this disclosure, ’nonionic surfactant’ shall be defined as amphiphilic molecules with a molecular weight of less than about 10,000, unless otherwise noted, which are substantially free of any functional groups that exhibit a net charge at the normal wash pH of 6-11.

Any type of nonionic surfactant may be used, although preferred materials are further discussed below. Highly preferred are fatty acid alkoxylates, especially ethoxylates, having an alkyl chain of from $C_8$-$C_{35}$, preferably $C_8$-$C_{30}$, more preferably $C_{10}$-$C_{24}$, especially $C_{10}$-$C_{18}$ carbon atoms, and having preferably 3 to 25, more preferred 5 to 15 ethylene oxide groups, for example, Neodols from Shell (The Hague, The Netherlands); ethylene oxide/propylene oxide block polymers which may have molecular weight from 1,000 to 30,000, for example, Pluronic (trademark) from BASF (Ludwigshafen, Germany); and alkylphenol ethoxylates, for example Triton X-100, available from Dow Chemical (Midland, Mich., USA).

Other nonionic surfactants should also be considered within the scope of this invention. These include condensates of alkanolamines with fatty acids, such as cocamide DEA, polyol-fatty acid esters, such as the Span series available from Uniqema (Gouda, The Netherlands), ethoxylated polyol-fatty acid esters, such as the Tween series available from Uniqema (Gouda, The Netherlands), alkylpolyglucosides, such as the APG line available from Cognis (Düsseldorf, Germany) and n-alkylpyrrolidones, such as the Surfadone series of products marketed by ISP (Wayne, N.J., USA). Furthermore, nonionic surfactants not specifically mentioned above, but within the definition, may also be used.

*Anionic surfactant*

’Anionic surfactants’ are defined herein as amphiphilic molecules comprising one or more functional groups that exhibit a net anionic charge when in aqueous solution at the normal wash pH of between 6 and 11.

Preferred anionic surfactants are the alkali metal salts of organic sulphur reaction products having in their molecular structure an alkyl radical containing from about 6 to 24 carbon atoms and a radical selected from the group consisting of sulphonic and sulphuric acid ester radicals.

Although any anionic surfactant hereinafter described can be used, such as alkyl ether sulphates, soaps, fatty acid ester sulphonates, alkyl benzene sulphonates, sulphosuccinate esters, primary alkyl sulphates, olefin sulphonates, paraffin sulphonates and organic phosphate; preferred anionic surfactants are the alkali and alkaline earth metal salts of fatty acid carboxylates, fatty alcohol sulphates, preferably primary alkyl sulfates, more preferably they are ethoxylated, for example alkyl ether sulfates; and alkylbenzene sulfonates or mixtures thereof.

*Cationic, amphoteric surfactants and/or zwitterionic surfactants*

Also cationic, amphoteric surfactants and/or zwitterionic surfactants may be present in the compositions according to the invention.

Preferred cationic surfactants are quaternary ammonium salts of the general formula $R_1R_2R_3R_4N^+ X^-$, for example where $R_1$ is a $C_{12}$-$C_{14}$ alkyl group, $R_2$ and $R_3$ are methyl groups, $R_4$ is a 2-hydroxyethyl group, and $X^-$ is a chloride ion. This material is available commercially as Praepagen (Trade Mark) HY from Clariant GmbH, in the form of a 40% by weight aqueous solution.

In a preferred embodiment the composition according to the invention comprises an amphoteric or zwitterionic surfactant. Amphoteric surfactants are molecules that contain both acidic and basic groups and will exist as zwitterions at the normal wash pH of between 6 and 11. Preferably an amphoteric or zwitterionic surfactant is present at a level of from 0.1 to 20% by weight, more preferably from 0.25 to 15% by weight, even more preferably from 0.5 to 10% by weight.

Suitable zwitterionic surfactants are exemplified as those which can be broadly described as derivatives of aliphatic quaternary ammonium, sulfonium and phosphonium compounds with one long chain group having about 8 to about 18 carbon atoms and at least one water solubilizing radical selected from the group consisting of sulfate, sulfonate, carboxylate, phosphate or phosphonate. A general formula for these compounds is:

$$R_1(R_2)_xY^+R_3Z^-$$

wherein $R_1$ contains an alkyl, alkenyl or hydroxyalkyl group with 8 to 18 carbon atoms, from 0 to 10 ethylene-oxy groups or from 0 to 2 glyceryl units; Y is a nitrogen, sulfur or phosphorous atom; $R_2$ is an alkyl or hydroxyalkyl group with 1 to 3 carbon atoms; x is 1 when Y is a sulfur atom and 2 when Y is a nitrogen or phosphorous atom; $R_3$ is an alkyl or hydroxyalkyl group with 1 to 5 carbon atoms and Z is a radical selected from the group consisting of sulfate, sulfonate, carboxylate, phosphate or phosphonate.

Preferred amphoteric surfactants are amine oxides, for example coco dimethyl amine oxide. Preferred zwitterionic surfactants are betaines, and especially amidobetaines. Preferred betaines are $C_8$ to $C_{18}$ alkyl amidoalkyl betaines, for example coco amido betaine. These may be included as co-surfactants, preferably present in an amount of from 0 to 10 wt %, more preferably 1 to 5 wt %, based on the weight of the total composition. Preferred amphoteric or zwitterionic surfactants for incorporation in the composition according to the present invention are betaine surfactants. Examples of these are mentioned in the following list.

The sulfatobetaines, such as 3-(dodecyldimethylammonium)-1-propane sulfate; and 2-(cocodimethylammonium)-1-ethane sulfate. The sulfobetaines, such as: 3-(dodecyldimethyl-ammonium)-2-hydroxy-1-propane sulfonate; 3-(tetradecyl-dimethylammonium)-1-propane sulfonate; 3-($C_{12}$-$C_{14}$ alkyl-amidopropyldimethylammonium)-2-hydroxy-1-propane sulfonate; and 3-(cocodimethylammonium)-1-propane sulfonate. The carboxybetaines, such as (dodecyldimethylammonium) acetate (also known as lauryl betaine); (tetradecyldimethylammonium) acetate (also known as myristyl betaine); (cocodimethylammonium) acetate (also known as coconut betaine); (oleyldimethylammonium) acetate (also known as oleyl betaine); (dodecyloxymethyldimethylammonium) acetate; and (cocoamido-propyldimethylammonium) acetate (also known as cocoamido-propyl betaine or CAPB).

The sulfoniumbetaines, such as: (dodecyldimethylsulfonium) acetate; and 3-(cocodimethyl-sulfonium)-1-propane sulfonate. The phosphoniumbetaines, such as 4-(trimethylphosphonium)-1-hexadecane sulfonate; 3-(dodecyldimethylphosphonium)-1-propanesulfonate; and 2-(dodecyldimethylphosphonium)-1-ethane sulfate.

The compositions according to the present invention preferably comprise carboxybetaines or sulphobetaines as amphoteric or zwitterionic surfactants, or mixtures thereof. Especially preferred is lauryl betaine.

*Detergency builders*

Detergency builder may be present in the detergent compositions according to the invention, but is not necessarily present. The concentration of detergency builder is suitably between 0 and 80%, preferably from 15 to 70% by weight of the detergent composition. Preferably, the quantity of builder is in the range of from 15 to 50% by weight of the detergent composition.

Preferably the builder is selected from the group of alkali and alkaline earth metal carbonates (e.g. sodium carbonate), phosphates (e.g. sodium tripolyphosphate), zeolites, silicates (e.g. layered silicate), and organic builders

such as citrates (e.g. sodium citrate), succinates, sulphamates and malonates, and any combination of these.

The zeolite used as a builder may be the commercially available zeolite A (zeolite 4A) now widely used in laundry detergent powders. Alternatively, the zeolite may be maximum aluminium zeolite P (zeolite MAP) as described and claimed in EP 384 070B (Unilever), and commercially available as Doucil (Trade Mark) A24 from Ineos Silicas Ltd, UK. Zeolite MAP is defined as an alkali metal aluminosilicate of zeolite P type having a silicon to aluminium ratio not exceeding 1.33, preferably within the range of from 0.90 to 1.33, preferably within the range of from 0.90 to 1.20. Especially preferred is zeolite MAP having a silicon to aluminium ratio not exceeding 1.07, more preferably about 1.00. The particle size of the zeolite is not critical. Zeolite A or zeolite MAP of any suitable particle size may be used.

Also preferred according to the present invention are phosphate builders, especially sodium tripolyphosphate. This may be used in combination with sodium orthophosphate, and/or sodium pyrophosphate. Other inorganic builders that may be present additionally or alternatively include sodium carbonate, layered silicate, amorphous aluminosilicates.

Organic builders that may be present include polycarboxylate polymers such as polyacrylates and acrylic/maleic copolymers; polyaspartates; monomeric polycarboxylates such as citrates, gluconates, oxydisuccinates, glycerol mono-di- and trisuccinates, carboxymethyloxysuccinates, carboxy-methyloxymalonates, dipicolinates, hydroxyethyliminodiacetates, alkyl- and alkenylmalonates and succinates; and sulphonated fatty acid salts. The polycarboxylates may also act as anti-ashing and anti-redeposition agent.

Organic builders may be used in minor amounts as supplements to inorganic builders such as phosphates and zeolites. Especially preferred supplementary organic builders are citrates, suitably used in amounts of from 5 to 30% by weight, preferably from 10 to 25% by weight; and acrylic polymers, more especially acrylic/maleic copolymers, suitably used in amounts of from 0.5 to 15% by weight, preferably from 1 to 10% by weight.

Builders, both inorganic and organic, are preferably present in alkali metal salt, especially sodium salt, form.

*Optional Ingredients*

In addition to the components detailed in the claims, the formulation may include one or more optional ingredients to enhance performance and properties. While it is not necessary for these elements to be present in order to practice this invention, the use of such materials is often very helpful in rendering the formulation acceptable for consumer use.

Examples of optional components include, but are not limited to: additional surfactants, including nonionic and anionic surfactants, amphoteric and zwitterionic surfactants, cationic surfactants, and soap; hydrotropes, fluorescent whitening agents, photobleaches, fibre lubricants, reducing agents, enzymes, enzyme stabilising agents (such as borates and polyols), powder finishing agents, defoamers, bleaches, bleach catalysts, soil release agents, anti-redeposition agents, dye transfer inhibitors, buffers, colorants, fragrances, pro-fragrances, rheology modifiers, anti-ashing polymers, preservatives, insect repellents, soil repellents, water-resistance agents, suspending agents, aesthetic agents, structuring agents, sanitisers, solvents, including aqueous and non-aqueous solvents, fabric finishing agents, dye fixatives, wrinkle-reducing agents, fabric conditioning agents and deodorizers.

Detergent compositions according to the invention may suitably contain a bleach system. The bleach system is preferably based on peroxy bleach compounds, for example, inorganic persalts or organic peroxyacids, capable of yielding hydrogen peroxide in aqueous solution. Suitable peroxy bleach compounds include organic peroxides such as urea peroxide, and inorganic persalts such as the alkali metal perborates, percarbonates, perphosphates, persilicates and persulphates. Preferred inorganic persalts are sodium perborate monohydrate and tetrahydrate, and sodium percarbonate. Especially preferred is sodium percarbonate having a protective coating against destabilisation by moisture. Sodium percarbonate having a protective coating comprising sodium metaborate and sodium silicate is disclosed in GB 2 123 044B.

The peroxy bleach compound is suitably present in an amount of from 5 to 35% by weight, preferably from 10 to 25% by weight.

The peroxy bleach compound may be used in conjunction with a bleach activator (bleach precursor) to improve bleaching action at low wash temperatures. The bleach precursor is suitably present in an amount of from 1 to 8% by weight, preferably from 2 to 5% by weight.

Preferred bleach precursors are peroxycarboxylic acid precursors, more especially peracetic acid precursors and peroxybenzoic acid precursors; and peroxycarbonic acid precursors. An especially preferred bleach precursor suitable for use in the present invention is N,N,N',N'-tetracetyl ethylenediamine (TAED). Also of interest are peroxybenzoic acid precursors, in particular, N,N,N-trimethylammonium toluoyloxy benzene sulphonate.

A bleach stabiliser (heavy metal sequestrant) may also be present. Suitable bleach stabilisers include ethylenediamine tetraacetate (EDTA) and the polyphosphonates such as Dequest (Trade Mark), EDTMP.

The detergent compositions may also contain one or more enzymes. Suitable enzymes include the proteases, amylases, cellulases, oxidases, peroxidases and lipases usable for incorporation in detergent compositions.

In particulate detergent compositions, detergency enzymes are commonly employed in granular form in amounts of from about 0.1 to about 3.0% by weight. However, any suitable physical form of enzyme may be used in any effective

amount.

In addition to the copolymer according to the invention, the detergent composition according to the invention may also contain antiredeposition agents. For example cellulose esters and ethers, for example sodium carboxymethyl cellulose, may also be present. Furthermore the compositions may also contain soil release polymers, for example sulphonated and unsulphonated PET/POET polymers, both end-capped and non-end-capped, and polyethylene glycol/ polyvinyl alcohol graft copolymers such as Sokolan (Trade Mark) HP22. Especially preferred soil release polymers are the sulphonated non-end-capped polyesters described and claimed in WO 95/32997 (Rhodia Chimie).

In a preferred embodiment of the invention the detergent composition comprises in addition to the copolymer of the invention:

(i) from 5 to 55% by weight, preferably from 10 to 15% by weight, of an anionic surfactant,
(ii) from 0.5 to 20% by weight, preferably from 1 to 5% by weight, of a non-ionic surfactant,
(iii) from 0 to 60% by weight, preferably from 15 to 40% by weight, of a detergency builder,
(iv) from 0 to 60% by weight, preferably from 10 to 30% by weight, of an inorganic non-builder salt,
(v) from 0.5 to 3% by weight, preferably from 1 to 2% by weight, of a polycarboxylate polymer, and
(vi) optionally other detergent ingredients to 100% by weight. All these percentages are given as percentages of the total composition.

**Methods for use of the copolymer**

The incorporation of the copolymer of the invention into a detergent composition provides the advantages that the primary detergency improved detergency of the surfactant system is improved. Hence in a further aspect the invention provides the use of a copolymer according to the invention to provide improved detergency to a laundry detergent composition comprising a surfactant. In this use preferably the number average molecular weight of the polymer according to the invention is between 2,000 and 50,000 Dalton, more preferably between 5,000 and 50,000 Dalton, mostly preferred between 5,000 and 20,000 Dalton.

In addition the copolymer of the invention may also exhibit soil release and/or anti-redeposition benefits in addition to this primary detergency benefit. Hence another aspect of the invention is the use of a copolymer according to the invention to provide improved soil release to a laundry detergent composition. By this method the polymer according to the invention is used as a soil release polymer. In this case the preferred number average molecular weight of the polymer according to the invention is between 50,000 and 100,000 Dalton. Preferably for use to provide improved soil release the polymer according to the invention has a block architecture.

Another aspect of the invention is the use of a copolymer according to the invention to provide improved anti-redeposition of soil to a laundry detergent composition. By this method the polymer according to the invention is used as an anti-redeposition polymer. In this use preferably the number average molecular weight of the polymer according to the invention is between 2,000 and 50,000 Dalton, more preferably between 5,000 and 50,000 Dalton, mostly preferred between 5,000 and 20,000 Dalton.

In another aspect the invention provides a method for improving the stain removal from a textile substrate, comprising the following steps:

a) provision of a wash liquor comprising the laundry detergent composition according to the invention; and,
b) contacting one or more stained textile substrates with said wash liquor during one or more steps of a laundry process.

This method may be done in an automatic washing machine, or may also be done in a manual laundry process.

Without wishing to be limited by theory, it is envisaged that the glycerol (meth)acrylate moiety of the copolymer according to the invention adheres to soil on fabric. Meanwhile the poly(alkylene oxide) alkyl ether (meth)acrylate moiety of the copolymer according to the invention stabilises the soil.

**Preparation of the detergent product**

According to one preferred embodiment of the invention, the detergent composition is in particulate form.

Powders of low to moderate bulk density may be prepared by spray-drying slurry, and optionally post dosing (dry-mixing) further ingredients. Routes available for powder manufacture include spray drying, drum drying, fluid bed drying, and scraped film drying devices such as the wiped film evaporator. A preferred form of scraped film device is a wiped film evaporator. One such suitable wiped film evaporator is the 'Dryex system' based on a wiped film evaporator available from Ballestra S.p.A.. Alternative equipment would be the Chemithon the 'Turbo Tube' dryer system wherein a high active surfactant paste is heated and metering to a multi tube, steam-jacketed drying vessel.

'Concentrated' or 'compact' powders may be prepared by mixing and granulating processes, for example, using a high-speed mixer/granulator, or other non-tower processes.

Tablets may be prepared by compacting powders, especially 'concentrated' powders.

## EXAMPLES

The invention will now be illustrated by the following nonlimiting examples.

### Example 1: Preparation of copolymer comprising monomers poly(ethylene glycol) methyl ether methacrylate and glycerol methacrylate

*(A) Preparation of poly(ethylene glycol) (PEG) macroinitiator (PEG-I)*

Monomethoxypolyethylene glycol 350, ex Aldrich (35g, 0.1 mol) was dissolved in anhydrous toluene (300mL) in a 2-necked round bottom flask fitted with a suba seal and calcium chloride guard tube. Polymer bound 4-(dimethylamino) pyridine (PS-DMAP) (8g), triethylamine (TEA) (11.2g, 0.111 mol) and a magnetic stirrer bar were added to the reaction solution. 2-Bromoisobutyryl bromide (25.3g, 0.11 mol) was added dropwise via a syringe through the suba seal, which caused the initially clear solution to turn to a milky suspension. After stirring at ambient overnight, the reaction solution was passed through a filter, and the toluene was removed using a rotary evaporator. The remaining brown liquid was dissolved in dichloromethane (200mL). This solution was added to a separating funnel and washed successively with saturated sodium bicarbonate solution (100mL), 1M hydrochloric acid (100mL) and brine (100mL). The dichloromethane layer was then dried over magnesium sulfate, filtered and the solvent evaporated. After drying overnight *under vacuo* the product was obtained as a light brown oil (50.5g, 95% yield).

Reaction scheme 1:

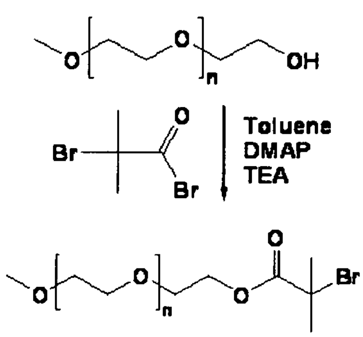


*Characterisation:*

IR : 1734 $cm^{-1}$ (s, saturated ester carbonyl)
NMR ($^1H$-$CDCl_3$) : 1.94 (d, ester $CH_3$, 6H); 3.37 (s, PEG-$OCH_3$, 3H); 3.64 (s, PEG-$CH_2$, 28H); 3.73 (t, PEG-$CH_2$-O, 2H); 4.33 (t, PEG-$CH_2$-O, 2H).

*(B) Preparation of copolymer of poly(ethylene glycol) methyl ether methacrylate (PEGMA) - glycerol monomethacrylate (GMMA)*

A copolymer according to the invention was prepared using atom transfer radical polymerisation (ATRP) technique, so that polymers with targeted molecular weights and compositions can be obtained. Poly(ethylene glycol) methyl ether methacrylate solution (*PEGMA,* Mn = 2080, 50 wt% in water) (ex Aldrich) (3.78g, 0.00091 mol), glycerol monomethacrylate (ex Evonik Industries) (*GMMA,* 1.46g, 0.0091 mol) and PEG-I (from step (A), 0.533g, 0.001 mol) were dissolved in methanol (5.32mL to give a final solvent composition of MeOH/water = 2.8:1) in a 3-necked 50mL round bottom flask fitted with a magnetic stirrer bar, a nitrogen gas inlet and a suba seal fitted with a gas outlet. Dry nitrogen gas was bubbled through the solution for 45 minutes. Catalyst copper(I)bromide (0.143g, 0.001 mol) and ligand 2,2'-dipyridyl (0.3124g, 0.002 mol) were weighed into a glass vial, mixed and added to the reaction mixture by lifting the suba seal from the flask's socket and replacing the seal immediately after addition of the solids. The reaction mixture turned to a green colour on mixing the solids into solution, also an increase in viscosity was noted. After mixing for 2 hours under a $N_2$ blanket at ambient temperature, the solution was then poured through a bed of silica to remove the copper

metal, which resulted in the initially dark green solution becoming clear and lightly brown coloured. After evaporation of the solvents and drying *in vacuo,* 5 gram of off-white polymer was obtained, which is called polymer 1 in this example.

Reaction scheme 2:

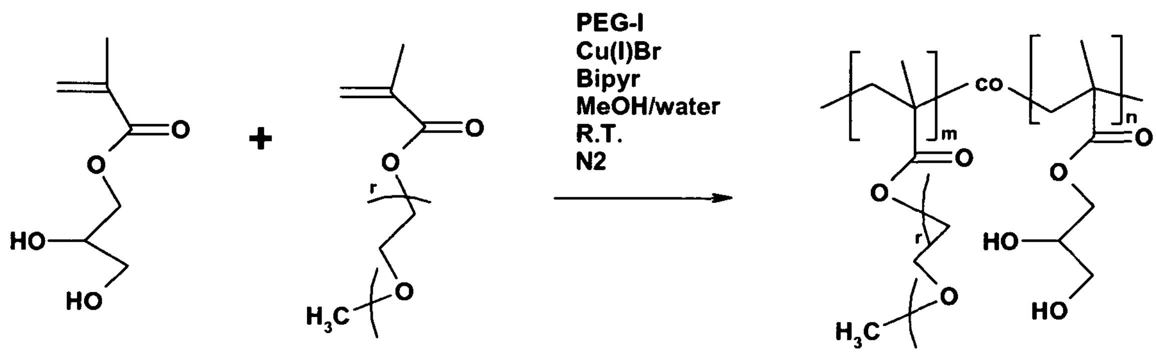


where m, n and r are positive integers. 'CO' in the molecular formula of the polymer indicates that the polymer is a copolymer, that is that the resultant polymer is a statistical copolymer of the 2 monomers chosen in the reaction.

*Characterisation of polymer 1:*

IR : 1723 $cm^{-1}$ (s, saturated ester carbonyl)
NMR ($^1H$-$D_2O$) : 0.8-1.3 (broad m, polymer backbone $CH_3$); 1.6-2.2 (broad m, polymer backbone $CH_2$); 3.36 (s, PEGMA-$OCH_3$); 3.45 (broad m, PEGMA-$CH_2CH_2$-O); 3.9-4.4 (broad m, PGMMA-$CH_2CH$OH). This indicates a mol ratio of *PEGMA* to *GMMA* of 1 : 6.
Triple detection SEC (eluent = THF) : Mn = 8,485 Da; Mw = 10,316 Da; PDi = 1.2.

**Example 2**

Two other copolymers were made by the same method as used in example 1, using the same monomers and initiator, wherein the initial molar ratio of the monomers (as supplied to the reaction vessel) was different as compared to the copolymer made in example 1. The results from the characterisation of the produced polymers is given in table 1 (including the polymer made in example 1):

**Table 1** Characterisation of copolymers of poly(ethylene glycol) methyl ether methacrylate and glycerol monomethacrylate according to the invention

| polymer | molar ratio of *PEGMA* to *GMMA* monomers (in synthesis) | actual composition from $^1H$-NMR (in $D_20$) (ratio of *PEGMA* to *GMMA)* | Mn (Da) | Mw (Da) | PDi |
|---|---|---|---|---|---|
| 1* | 1:10 | 1:6 | 8,485 | 10,316 | 1.2 |
| 2 | 1:1 | 1:1 | 16, 654 | 19,478 | 1.17 |
| 3 | 10:1 | 10:1 | 17,581 | 22,080 | 1.26 |
| * polymer 1 is the copolymer as made in example 1 | | | | | |

**Example 3: Measurement of the effect of the polymers on primary detergency**

*Measurement of Soil Release Index (SRI)*

SRI is a measure of how much of a stain on textile is removed during a washing process. The intensity of any stain can be measured by means of a reflectometer in terms of the difference between the stain and clean cloth giving $\Delta E^*$ for each stain. It is defined as $\Delta E^*$ and is calculated as:

$$\Delta E^{*} = \sqrt{(L^{*}_{stain-before} - L^{*}_{clean-cloth})^2 + (a^{*}_{stain-before} - a^{*}_{clean-cloth})^2 + (b^{*}_{stain-before} - b^{*}_{clean-cloth})^2}$$

L*, a*, and b* are the coordinates of the CIE 1976 (*L**, *a**, *b**) colour space, determined using a standard reflectometer. $\Delta E^*$ can be measured before and after the stain is washed, to give $\Delta E^*_{bw}$ (before wash) and $\Delta E^*_{aw}$ (after wash). SRI is then defined as:

$$SRI = 100 - \Delta E^{*}_{aw}$$

A SRI of 100 means complete removal of a stain.

Wash liquors were formulated, containing as surfactants primary alkyl sulfate (PAS anionic surfactant, average $C_{12}$, EMAL PH10 ex Kao) and alcohol ethoxylate (nonionic surfactant average $C_{12}$-$C_{15}$-7EO, Neodol 25-7 ex Shell), as shown in table 2 at the indicated concentrations. Additionally the wash liquor contained other standard compounds of a laundry detergent (e.g. builder), as well as NaCl at a concentration of 5 mM. Water hardness was 6°FH. The polymers according to the invention as made in examples 1 and 2 were tested in the different wash liquors.

**Table 2** Concentrations of surfactants and copolymer in wash liquors.

| Ingredient | Formulation | | | |
|---|---|---|---|---|
| | 1 | 2 | 3 | 4 |
| | in wash concentration (g/L) | | | |
| primary alkyl sulfate (average $C_{12}$ ) | 0.33 | 0.33 | 0.33 | 0.33 |
| alcohol ethoxylate | 0.16 | 0.16 | 0.16 | 0.16 |
| polymer 1 (*PEGMA*:*GMMA* = 1:6) | | 0.05 | | |
| polymer 2 (*PEGMA*:*GMMA* = 1:1) | | | 0.05 | |
| polymer 3 (*PEGMA*:*GMMA* = 10:1) | | | | 0.05 |

The following results (table 3) were obtained for the removal of red gravel stains from knitted polyester cloth and the removal of grass stains from woven cotton, as measured in the following standard protocol, called the Tergometer Protocol, using a Tergometer washing machine.

*Wash Protocol*

1. Measurement of the colour of the stain on the textile cloth
2. Set Tergometer to 25°C.
3. Add water, formulation and polymer stock solutions to each pot, agitate for 1 minute.
4. Add stain cloths and ballast, set tergo going.
5. Leave to wash for 12 minutes
6. Rinse cloths in 6°FH water (soft water) for 1 minute, repeat rinse.
7. Dry cloths overnight.
8. Measurement of the colour of the stain on the textile cloth

**Table 3** Stain removal index (SRI) for red gravel stains on knitted polyester and grass on woven cotton (Tergometer protocol).

| Formulation | SRI<br>red gravel stains on knitted polyester | SRI<br>grass stains on woven cotton |
|---|---|---|
| 1 (comparative) | 86.3 | 69.7 |
| 2 | 90.5 | 70.4 |
| 3 | 90.8 | 72.5 |
| 4 | 88.8 | 69.9 |

It is shown here that the polymers increase the primary detergency on red gravel and grass stains.

Some typical formulations of detergent compositions according to the present invention are given in table 4, for use under European washing conditions.

**Table 4** Typical detergent compositions according to the invention.

| Ingredient | Powder Formulation<br>concentration in final product [weight %]) | Liquid Detergent Formulation<br>(concentration in final product [weight %]) | Concentrated Liquid Detergent<br>(concentration in final product [weight %]) |
|---|---|---|---|
| linear alkyl benzene sulfonate | 10 | 12 | 24 |
| alcohol ethoxylate | 5 | 6 | 12 |
| zeolite builder | 20 | | |
| sodium carbonate | 20 | | |
| enzymes | 1 | 1 | 2 |
| whitening agent | 0.1 | 0.1 | 0.1 |
| bleach | 15 | | |
| bleach activator | 1 | | |
| copolymer of poly (ethylene glycol) methyl ether methacrylate and glycerol methacrylate (according to the invention) | 1.5 | 1 | 2 |
| sodium citrate | | 5 | 5 |
| sodium chloride | | 2 | 2 |
| sodium hydroxide | | 1 | 1 |
| dispersent (e.g. polycarboxylate) | | 1 | 2 |
| water, perfume, foam control & other minors | balance | balance | balance |

## Claims

1. A water soluble non-crosslinked copolymer comprising the monomers glycerol (meth)acrylate and poly(alkylene oxide) alkyl ether (meth)acrylate, and less than 20wt% of another type of monomer wherein the copolymer has a number average molecular weight between 2,000 and 100,000 Dalton.

2. A copolymer according to claim 1, having a number average molecular weight between 5,000 and 20,000 Dalton.

3. A copolymer according to claim 1 or 2, wherein the poly(alkylene oxide) alkyl ether (meth)acrylate is selected from the group consisting of poly(ethylene glycol) methyl ether (meth)acrylate, polyethylene glycol) ethyl ether (meth) acrylate, polypropylene glycol) methyl ether (meth)acrylate, poly(propylene glycol) ethyl ether (meth)acrylate, and mixtures thereof.

4. A copolymer according to any of claims 1 to 3, wherein the poly(alkylene oxide) alkyl ether (meth)acrylate comprises poly(ethylene glycol) methyl ether (meth)acrylate.

5. A copolymer according to any of claims 1 to 4, wherein the number average molecular weight of the poly(alkylene oxide) alkyl ether (meth)acrylate monomer is between 300 and 5,000 Dalton.

6. A copolymer according to any of claims 1 to 5, wherein the molar ratio of the monomers polyalkylene oxide) alkyl ether (meth)acrylate to glycerol (meth)acrylate ranges from 10:1 to 1:10.

7. A copolymer according to any of claims 1 to 6, wherein the copolymer is a branched copolymer-comprising at least two chains of monomers,
wherein said chains comprise the monomer glycerol (meth)acrylate, or the monomer poly(alkylene oxide) alkyl ether (meth)acrylate, or both monomers, and
wherein the chains are covalently linked other than at their ends by a bridge formed by an ethyleneically polyunsaturated monomer.

8. A method for production of the copolymer according to any of claims 1 to 7 by an addition polymerisation process, comprising the steps of:

   a) forming an admixture of or comprising the monomers glycerol (meth)acrylate and poly(alkylene oxide) alkyl ether (methacrylate, and an initiator; and
   b) reacting the mixture from a) to form a copolymer.

9. A laundry detergent composition comprising:

   a) a detersive surfactant at a (concentration between 3 and 85% by weight of the total composition;
   b) a copolymer according to any of claims 1 to 7 at a concentration between 0.5 and 25% by weight of the total composition;
   c) optionally other detergent ingredients up to 100% by weight of the total composition.

10. Use of a copolymer according to any of claims 1 to 7 to provide improved detergency to a laundry detergent composition comprising a surfactant.

11. Use of a copolymer according to any of claims 1 to 7 to provide improved soil release to a laundry detergent composition,

12. Use of a copolymer according to any of claims 1 to 7 to provide improved anti-redeposition of to a laundry deterrent composition.

13. A method for improving the stain removal from a textile substrate, comprising the following steps:

   a) provision of a wash liquor comprising the laundry detergent composition according to claim 9; and,
   b) contacting one or more stained textile substrates with said wash liquor during one or more steps of a laundry process.

**Patentansprüche**

1. Wasserlösliches, unvemetztes Copolymer, das die Monomere Glycerin(meth)acrylat und Poly(alkylenoxid)alkylether (meth)acrylat und weniger als 20 Gew.-% eines anderen Monomertyps aufweist, wobei das Copolymer ein Zahlenmittel des Molekulargewichts von 2000 bis 100000 Dalton aufweist.

2. Copolymer nach Anspruch 1, das ein Zahlenmittel des Molekulargewichts von 5000 bis 20000 Dalton aufweist.

3. Copolymer nach Anspruch 1 oder 2, wobei das Poly(alkylenoxid)alkylether(meth)acrylat aus der Gruppe ausgewählt ist, bestehend aus Poly(ethylenglycol)methylether(meth)acrylat, Poly(ethylenglycol)ethylether(meth)acrylat, Poly(propylenglycol)methylether(meth)acrylat, Poly(propylenglycol)ethylether(meth)acrylat, und Gemischen davon.

4. Copolymer nach einem der Ansprüche 1 bis 3, wobei das Poly(alkylenoxid)alkylether(meth)acrylat Poly(ethylenglycol)methylether(meth)acrylat aufweist.

5. Copolymer nach einem der Ansprüche 1 bis 4, wobei das Zahlenmittel des Molekulargewichts des Poly(alkylenoxid)alkylether(meth)acrylat-Monomers 300 bis 5000 Dalton beträgt.

6. Copolymer nach einem der Ansprüche 1 bis 5, wobei das Molverhältnis zwischen den Monomeren Poly(alkylenoxid)alkylether(meth)acrylat und Glycerin(meth)acrylat im Bereich von 10:1 bis 1:10 liegt.

7. Copolymer nach einem der Ansprüche 1 bis 6, wobei das Copolymer ein verzweigtes Copolymer ist, das mindestens zwei Ketten von Monomeren aufweist, wobei diese Ketten das Monomer Glycerin(meth)acrylat oder das Monomer Poly(alkylenoxid)alkylether(meth)acrylat oder beide Monomere aufweisen und wobei die Ketten außer an ihren Enden durch eine Brücke kovalent miteinander verbunden sind, die von einem mehrfach ethylenisch ungesättigten Monomer gebildet wird.

8. Verfahren zum Herstellen des Copolymers nach einem der Ansprüche 1 bis 7 durch ein Additionspolymerisationsverfahren, das die folgenden Schritte aufweist:

   a) Erzeugen eines Gemischs der oder umfassend die Monomere Glycerin(meth)acrylat und Poly(alkylenoxid)alkylether(meth)acrylat und eines Initiators; und
   b) Umsetzen des Gemischs von a), um Copolymer zu erzeugen.

9. Waschmittelzusammensetzung, die Folgendes aufweist:

   a) ein reinigendes Tensid in einer Konzentration von 3 bis 85 Gew.-% der gesamten Zusammensetzung;
   b) ein Copolymer nach einem der Ansprüche 1 bis 7 in einer Konzentration von 0,5 bis 25 Gew.-% der gesamten Zusammensetzung;
   c) gegebenenfalls andere Waschmittelbestandteile bis auf 100 Gew.-% der gesamten Zusammensetzung.

10. Verwendung eines Copolymers nach einem der Ansprüche 1 bis 7 für die Bereitstellung einer besseren Waschleistung bei einer Waschmittelzusammensetzung, die ein Tensid aufweist.

11. Verwendung eines Copolymers nach einem der Ansprüche 1 bis 7 für die Bereitstellung einer besseren Schmutzauswaschbarkeit bei einer Waschmittelzusammensetzung.

12. Verwendung eines Copolymers nach einem der Ansprüche 1 bis 7 für die Bereitstellung eines besseren Schmutztragevermögens bei einer Waschmittelzusammensetzung.

13. Verfahren zum Verbessern der Fleckentfernung aus einem textilen Substrat, das die folgenden Schritte aufweist:

   a) Bereitstellen einer Waschlauge, die die Waschmittelzusammensetzung nach Anspruch 9 aufweist; und
   b) Inkontaktbringen von einem oder mehreren fleckigen textilen Substraten mit der Waschlauge während eines Schrittes oder mehrerer Schritte eines Waschprozesses.

## Revendications

1. Copolymère non réticulé soluble dans l'eau comprenant les monomères de (méth)acrylate de glycérol et de (méth) acrylate d'alkyléther de poly(oxyde d'alkylène), et moins de 20 % en poids d'un autre type de monomère dans lequel le copolymère a un poids moléculaire moyen en nombre compris entre 2 000 et 100 000 Dalton.

2. Copolymère selon la revendication 1, ayant un poids moléculaire moyen en nombre compris entre 5 000 et 20 000 Dalton.

3. Copolymère selon la revendication 1 ou 2, dans lequel le (méth)acrylate d'alkyléther de poly(oxyde d'alkylène) est choisi dans le groupe constitué du (méth)acrylate de méthyléther de poly(éthylène glycol), du (méth)acrylate d'éthyléther de poly(éthylène glycol), du (méth)acrylate de méthyléther de poly(propylène glycol), du (méth)acrylate d'éthyléther de poly(propylène glycol) et de leurs mélanges.

4. Copolymère selon l'une quelconque des revendications 1 à 3, dans lequel le (méth)acrylate d'alkyléther de poly (oxyde d'alkylène) comprend du (méth)acrylate de méthyléther de poly(éthylène glycol).

5. Copolymère selon l'une quelconque des revendications 1 à 4, dans lequel le poids moléculaire moyen en nombre du monomère de (méth)acrylate d'alkyléther de poly(oxyde d'alkylène) est compris entre 300 et 5 000 Dalton.

6. Copolymère selon l'une quelconque des revendications 1 à 5, dans lequel le rapport molaire des monomères de (méth)acrylate d'alkyléther de poly(oxyde d'alkylène) au (méth)acrylate de glycérol varie de 10/1 à 1/10.

7. Copolymère selon l'une quelconque des revendications 1 à 6 dans lequel le copolymère est un copolymère ramifié comprenant au moins deux chaînes de monomères,
dans lequel lesdites chaînes comprennent le monomère de (méth)acrylate de glycérol, ou le monomère de (méth) acrylate d'alkyléther de poly(oxyde d'alkylène), ou les deux monomères, et
dans lequel les chaînes sont reliées par covalence ailleurs qu'à leurs extrémités par un pont formé par un monomère éthyléniquement polyinsaturé.

8. Procédé de production du copolymère selon l'une quelconque des revendications 1 à 7 par un procédé de polymérisation par addition, comprenant les étapes consistant à :

   a) former un mélange constitué des monomères de (méth)acrylate de glycérol et de (méth)acrylate d'alkyléther de poly(oxyde d'alkylène) ou comprenant ceux-ci, et d'un initiateur ; et
   b) faire réagir le mélange de a) pour former un copolymère.

9. Composition détergente pour lessive comprenant :

   a) un tensioactif détergent à une concentration comprise entre 3 et 85 % en poids de la composition totale ;
   b) un copolymère selon l'une quelconque des revendications 1 à 7 à une concentration comprise entre 0,5 et 25 % en poids de la composition totale ;
   c) optionnellement d'autres ingrédients détergents jusqu'à 100 % en poids de la composition totale.

10. Utilisation d'un copolymère selon l'une quelconque des revendications 1 à 7 pour conférer une détergence améliorée à une composition détergente pour lessive comprenant un tensioactif.

11. Utilisation d'un copolymère selon l'une quelconque des revendications 1 à 7 pour conférer des propriétés améliorées de libération des salissures à une composition détergente pour lessive.

12. Utilisation d'un copolymère selon l'une quelconque des revendications 1 à 7 pour conférer des qualités améliorées d'anti-redéposition à une composition détergente pour lessive.

13. Procédé d'amélioration de l'élimination des taches sur un substrat textile comprenant les étapes suivantes consistant à :

   a) fournir une liqueur de lavage comprenant la composition détergente pour lessive selon la revendication 9 ; et,
   b) mettre en contact un ou plusieurs substrats textiles tachés avec ladite liqueur de lavage pendant une ou

plusieurs étapes d’un procédé de lavage de lessive.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1354498 A
- WO 9734984 A
- EP 1611877 A1
- US 7238753 B1
- EP 0408917 A1
- GB 1283813 A
- WO 9851261 A
- EP 384070 B
- GB 2123044 B
- WO 9532997 A


### Non-patent literature cited in the description


- **NAKAGAWA.** *Polymer,* vol. 39 (21), 5163-5170
- **HADDLETON.** *Macromolecules,* 1997, vol. 30, 2190-2193
- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981